# EUROPÄISCHE PATENTSCHRIFT

(11) **EP 1 009 573 B1**
(45) Veröffentlichungstag und Bekanntmachung des Hinweises auf die Patenterteilung: **23.05.2001**
(21) Anmeldenummer: 98945207.3
(22) Anmeldetag: 11.08.1998
(51) Int. Cl.: B23G 5/00, B23B 27/14

(54) **GEWINDESCHNEIDPLATTE**
SCREWING PLATE
PLAQUETTE DE FILETAGE

(30) Priorität: 03.09.1997 DE 19738456
(43) Veröffentlichungstag der Anmeldung: 21.06.2000
(73) Patentinhaber: KENNAMETAL INC., Latrobe, PA 15650-0231 (US)
(72) Erfinder: HARTLÖHNER, Rudi, D-90587 Tuchenbach (DE); PROKOP, Hermann, D-91413 Neustadt an der Aisch (DE)
(74) Vertreter: Tergau & Pohl Patentanwälte
(86) Internationale Anmeldenummer: EP9805078
(87) Internationale Veröffentlichungsnummer: WO9911416

(56) Entgegenhaltungen:
- WO-A-95/07159
- US-A- 4 669 925

## Beschreibung

Die Erfindung betrifft eine Gewindeschneidplatte mit den im Oberbegriff des Anspruches 1 aufgeführten Merkmalen. Zur bildhaften Beschreibung der Gestalt des dort zwischen den Spanflächen auf einer Schneidecke aufsitzenden Spanformers ist der Begriff "Sporn" verwendet. Gemäß BROCKHAUS ENZYKLOPÄDIE 1993, Bd. 19, ist in der Geographie darunter eine "vorspringende Geländeform, meist steilwandig, bes. im Schnittpunkt zweier sich spitzwinklig treffender, tief eingeschnittener Täler" zu verstehen. Eine dreieckige Gewindeschneidplatte mit drei geometrisch gleichgestalteten Schneidecken und diese mit den gattungsgemäß im Oberbegriff des Anspruches 1 aufgeführten Merkmalen ist aus WO 95/07159 bekannt.

Der bekannten Gewindeschneidplatte liegt die Aufgabe zugrunde, durch die geometrische Gestalt der jeweils in Eingriffsstellung befindlichen Schneidspitze die Spanformung so zu steuern, daß kürzere Späne gebildet werden. Dadurch soll ein für Bedienungspersonen gefährlicher Stau der Spanabfuhr vermieden werden, wodurch die Gewindeplatte auch für eine Massenfertigung ohne ständige Beobachtung durch Bedienungspersonal einsetzbar ist.

Aus US 4 669 925 ist eine Gewindeschneidplatte für hohe Zerspanungsleistungen zur Herstellung von Säge- oder Trapezgewinden bekannt. Die Hauptschneide dieser Gewindeschneidplatte verläuft etwa parallel zur Gewindeachse und ist von zwei die Gewindeflanken formenden Nebenschneiden eingefaßt. Auf der mit einem positiven Spanwinkel versehenen Schneidfläche ist ein in Richtung auf die Hauptschneide und auf die beiden Nebenschneiden hin dreifach konkav ausgemuldeter Spanbrecher mit zur Schneidplattendeckfiäche geneigt aufsteigenden Spanleitfiächen angeordnet. Zwischen den Ausmuldungen ist jeweils ein gratartiger Vorsprung gebildet, der mit abnehmender Höhe bis zu einer der beiden Nebenschneiden vorsteht und den Span aufteilt. Dadurch wird der Spanablauf in eine Richtung rechtwinklig zur Gewindeachse gelenkt und ein Spanbruch begünstigt, der Wirrspäne verhindert. Die Flanken der gratartigen Vorsprünge zwischen den ausgemuldeten Stirnflächen des Spanbrechers konvergieren indessen nicht in Richtung auf eine Schneidspitze sondern in Richtung auf jeweils eine Nebenschneide und ihre Ausrichtung verläuft in einem Winkel zur angrenzenden Nebenschneide. Schon infolge der speziellen Form des von der Gewindeschneidplatte herzustellenden Sägengewindes obliegt dieser bekannten Gewindeschneidplatte eine andere Aufgabe als dem Erfindungsgegenstand.

Die Erfindung geht aus von der Erkenntnis, daß beim Gewindeschneiden mit herkömmlichen Schneidkörpern die Oberfläche einer Schneidspitze mit einer unter einem Winkel angeformten Spanformstufe versehen ist Es handelt sich dabei meist um Lochwendeplatten in Dreieckform mit einer an jeder Ecke angeformten Schneidspitze als Gewindeprofilzahn. Beim Gewindeschneiden mit solchen Schneidplatten entstehen bedingt durch die kaum veränderbaren Schnitt- oder Zustellparameter im Querschnitt V-förmige oder sehr stabile Band- bzw. Wirrspäne, die sich auf CNC-Drehmaschinen mit engem Maschinenraum auf den Bearbeitungsprozeß sehr störend auswirken. Mit der vorliegenden Erfindung soll das auch der Gewindeschneidplatte nach dem Stand der Technik zugrundeliegende Problem in anderer Weise gelöst werden.

Die Lösung der Erfindungsaufgabe ist im Anspruch 1 niedergelegt. Danach ist der Abstand der Flanken des die Spanflächen nach Art eines Tafelberges überragenden spornartigen Spanformers zum Schneidkantenverlauf an beiden Seiten des Spanformers unterschiedlich groß. Dadurch wird auf der einen Seite des Spanformers eine breitere und auf der anderen Seite eine schmalere Spanfläche gebildet. Gleichzeitig sind die Flanken des Spanformers unterschiedlich stark geneigt. Diese Form hat sich als besonders zweckmäßig für das Arbeiten der Gewindeschneidplatte mit abgewandelter bzw. modifizierter Flankenzustellung beim Gewindeschneiden herausgestellt. Hier ist der für eine bildliche Beschreibung der Gestalt des erfindungsgemäßen Spanformers verwendete Begriff "Tafelberg" ebenfalls der Geographie entlehnt Nach BROCKHAUS ENZYKLOPÄDIE, Bd. 21 von 1993 ist darunter eine "isolierte, plateauartige Bergform .... mit meist tischebener Oberfläche" zu verstehen.

Beim Gewindeschneiden gibt es drei unterschiedliche Arten der Zustellung des Gewindeschneidzahnes. Es sind eine radiale Zustellung, eine Zustellung entlang der Flanke des Gewindeschneidzahns und eine Mischform zwischen diesen beiden Zustellungsarten bekannt. Diese Mischform wird als "modifizierte bzw. abgewandelte Flankenzustellung" bezeichnet (s. Firmenprospekt 602.00 D "Gewindedrehen" der Anmelderin oder englischsprachige Ausgabe 602.00 GB, jeweils "Threading", Seite 39). Beim Einsatz der erfindungsgemäßen Gewindeschneidplatten mit modifizierter bzw. abgewandelter Flankenzustellung ist die mit der breiteren Spanfläche ausgestattete Schneidkante einer jeden Schneidspitze auf der in Zustellungsrichtung liegenden Flankenseite größer als auf der der Zustellrichtung abgewandten Flankenseite. Mit einer derart erfindungsgemäß konzipierten Gewindeschneidplatte und mittels einer um 3-5° modifizierten bzw. abgewandelten Flankenzustellung (s. Firmenprospekt 602.00, Seite 39, linke Bildspalte mit der Überschrift "Art der Zustellung", 3. Bild von oben) ist ein sehr kurzer Spanbruch zu erzielen. Hierbei wird davon ausgegangen, daß die Schnitt- und Zustellparameter auf den jeweiligen Werkstoff abgestimmt sind.

In einer ökonomisch zweckmäßigen Ausführung ist die erfindungsgemäße Gewindeschneidplatte eine Dreieckplatte mit drei gleichgestalteten Schneidspitzen analog WO 95/07159. Sie kann auch mit unterschiedlichen Gewindeprofilformen als Gewindestrehler ausgeführt sein.

Die erfindungsgemäße Schneidplatte wird anhand eines in den Figuren dargestellten Ausführungsbeispieles näher erläutert. Es zeigen:

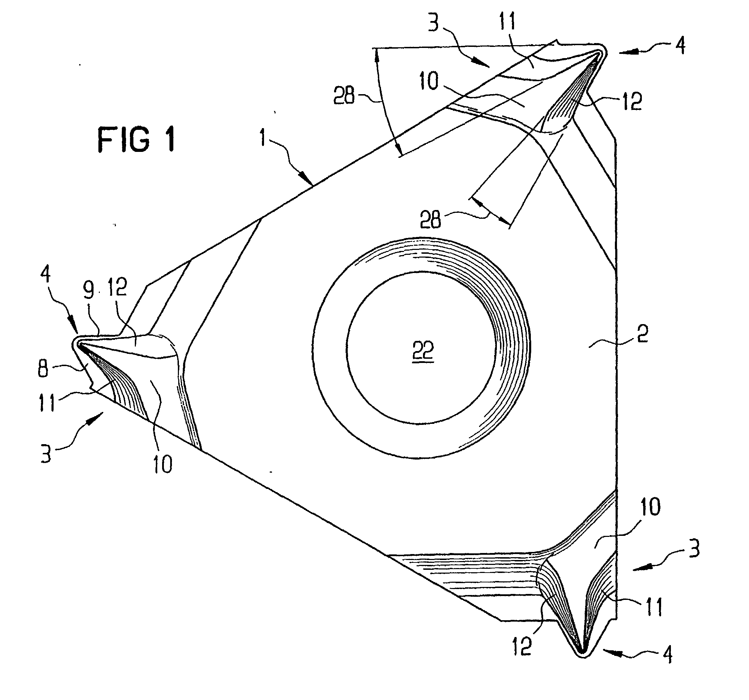

- Fig.1: eine Draufsicht auf eine als Dreieckplatte ausgebildete Gewindeschneidplatte,

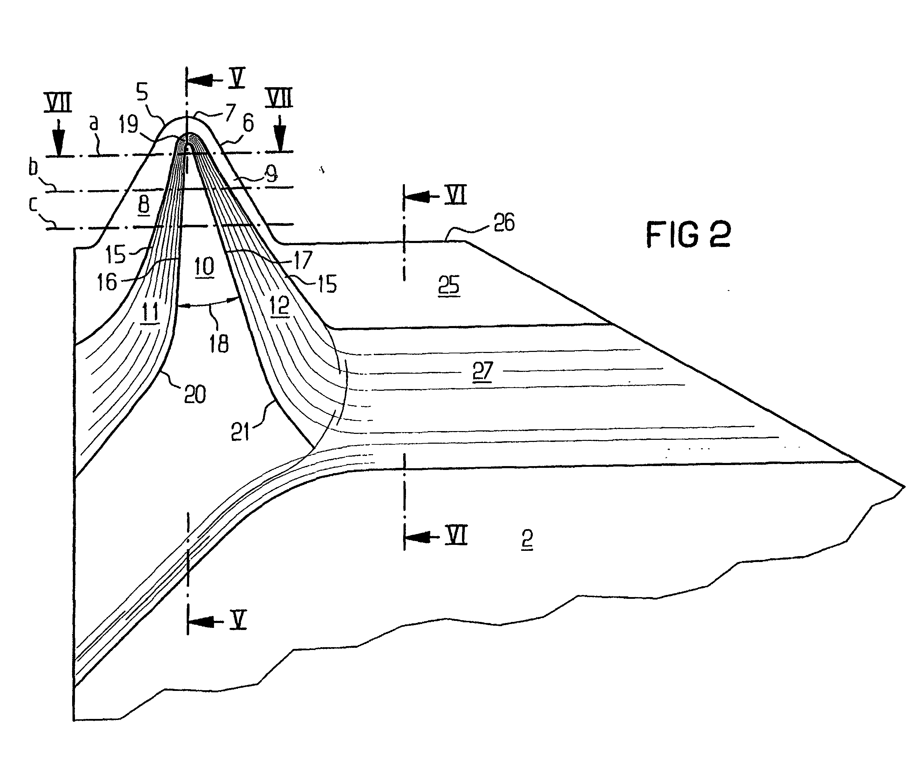

- Fig. 2: eine Schneidecke der Gewindeschneidplatte in vergrößerter Draufsicht und mit in Längs- und in Querrichtung des spornartigen Spanformers eingezeichnet verlaufenden Schnittebenen zur Darstellung von Profilquerschnitten,

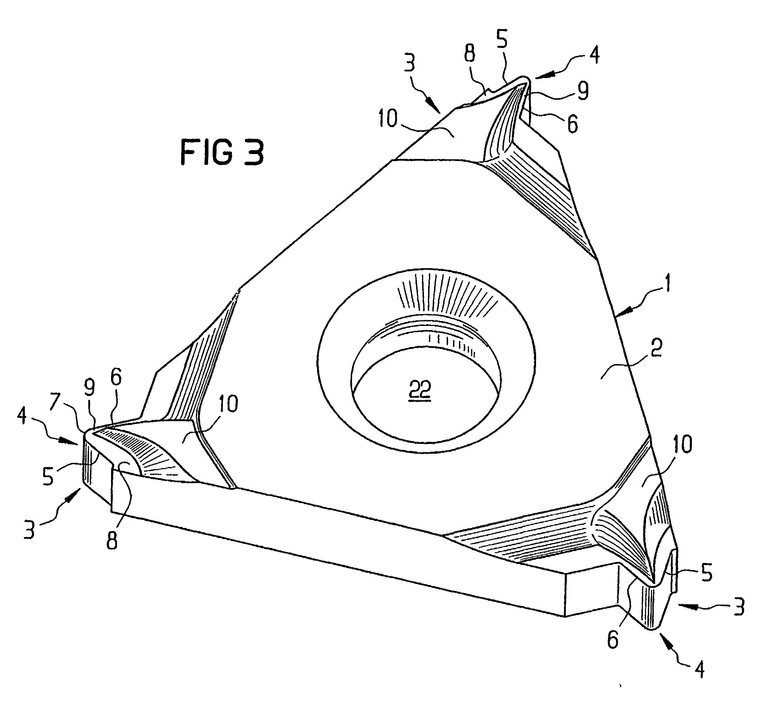

- Fig. 3: eine perspektivische Draufsicht auf die Schneidplatte analog Fig. 1,
- Fig. 4: eine vergrößerte, perspektivische Darstellung einer Schneidecke der Gewindeschneidplatte,
- Fig. 5: einen Teil-Profilquerschnitt entsprechend der Schnittlinie V-V in Fig. 2 durch die Schneidspitze,
- Fig. 6: einen Teil-Profilquerschnitt durch die Schneidkante der Gewindeschneidplatte in einem Bereich neben der Schneidspitze entsprechend der Schnittlinie VI-VI in Fig. 2,

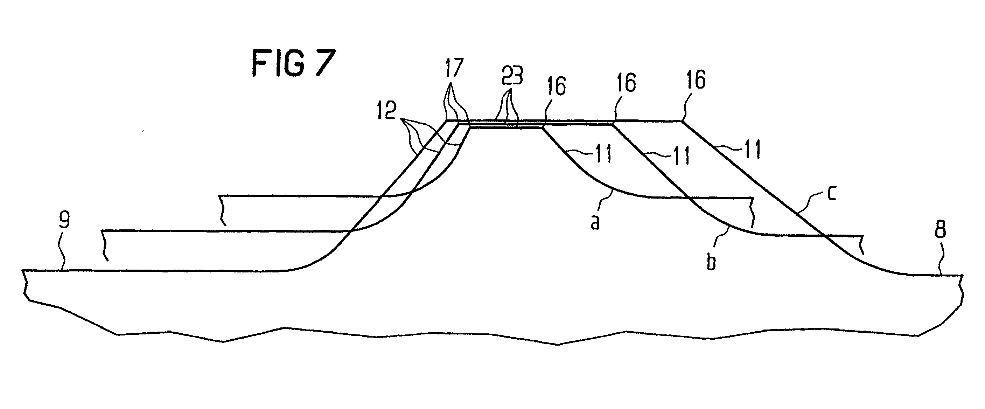

- Fig. 7: hintereinander gestaffelt Profilquerschnitte a-c der Schneidspitze entsprechend den Schnittebenen VII-VII in Fig. 2.

Die Gewindeschneidplatte 1 ist beim Ausführungsbeispiel eine Dreieckplatte mit drei geometrisch gleichgestalteten, durch Wenden der Schneidplatte 1 in einem Halter nacheinander in Schneidstellung bringbaren Schneidspitzen 4. Sie besteht aus hartem Schneidwerkstoff und weist eine Auflagefläche sowie eine dazu im wesentlichen parallele Deckfläche 2 auf. Die entsprechend der Gewindeform profilierten Schneidspitzen 4 stehen nach außen aus den Schneidecken 3 vor. Sie bilden nach Art der Schenkel eines V nach außen konvergierende Schneidkanten 5,6 mit einer dazwischenliegenden, abgerundeten Winkelscheitel-Schneidkante 7. Die geometrische Form dieser Schneidspitze 4 steht im Vordergrund der Erfindung. Der Träger dieser Schneidspitze 4 kann unterschiedlich ausgebildet sein. Vorliegend ist er durch eine Dreieckplatte gebildet.

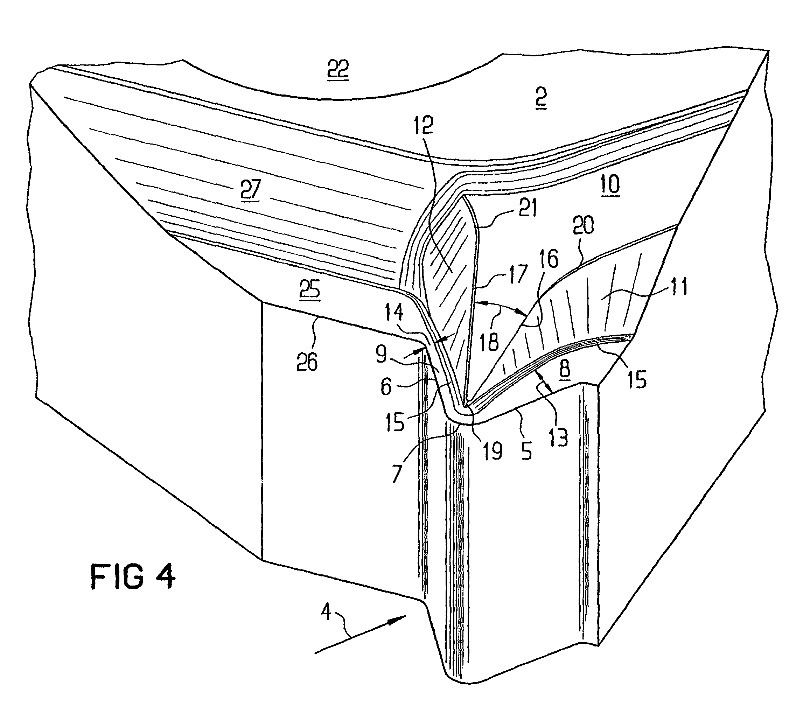

Über die Spanflächen 8,9 der Schneidkanten 5,6 der Schneidspitze 4 steht ein Spanformer 10 nach Art eines zur Schneidspitze 4 bzw. zur Winkelscheitel-Schneidkante 7 hin konvergierenden Sporns hinaus. Dessen nach Art der Steilwände eines Sporns geneigt abfallende Flanken 11,12 halten von den benachbarten Schneidkanten 5,6 einen jeweils unterschiedlich großen Abstand ein, der dementsprechend unterschiedlich breite Spanflächen 8,9 bildet. Die mit der breiteren Spanfläche 8 versehene Schneidkante 5 ist derjenigen Flankenseite der Schneidspitze 4 zugeordnet, die in Zustellungsrichtung der modifizierten bzw. abgewandelten Flankenzustellung liegt. Die Richtung des Abstandsmaßes ist in Fig. 4 mit den Bezugszeichen 13,14 verdeutlicht.

Die der schmaleren Spanfläche 9 zugewandte Flanke 12 des Spanformers 10 ist stärker geneigt als die der breiteren Spanfläche 8 zugewandte Flanke 11. Vorzugsweise sind die beiden Flanken 11,12 im Bereich der Schneidspitze 4 im wesentlichen durch Ebenen gebildet. Dementsprechend schließt die der schmaleren Spanfläche 9 zugewandte Flanke 12 des Spanformers 10 einen größeren Neigungswinkel mit der angrenzenden Spanfläche 9 ein als die andere Flanke 11 mit der anderen Spanfläche 8. Der Übergang der Flanken 11,12 des Spanformers 10 in die zugehörigen Spanflächen 8,9 ist ausgerundet. Die Ausrundungen tragen die Bezugsziffer 15.

Die den Übergang der Plateaufläche 23 des Spanformers 10 zu den Spornflanken 11,12 bildenden Flankenkanten 16,17 sind mindestens im Bereich der Schneidspitze 4 geradlinig. Sie bilden zwischen sich einen spitzen Winkel 18, dessen Scheitelbereich 19 abgerundet ist. Die Flanken 11,12 des Sporns divergieren an ihren inneren, mit Abstand von der Schneidspitze 4,7 positionierten Enden 20,21 ausgerundet nach Art eines Kelches. Die Plateaufläche 23 des Spanformers 10 ist von ihrem der Schneidspitze 4,7 zugewandten äußeren Ende in Richtung zur Deckfläche 2 bzw. zur von einem Spannloch 22 gebildeten Mitte der Schneidplatte hin leicht ansteigend geneigt. Das Längsprofil der Oberfläche des Spanformers 10 ist in Fig. 5 dargestellt. Daraus ist der leicht ansteigende Verlauf der Plateaufläche 23 des Spanformers 10 besonders deutlich erkennbar. Die Plateaufläche 23 steigt an ihrem deckflächenseitig in Draufsicht kelchartig aufgeweiteten Bereichen jenseits der Enden 20,21 der geradlinigen Flankenkanten 16,17 in die Deckfläche 2 auf. Dieser aufsteigende Bereich 24 ist in dem Profilquerschnitt von Fig. 5 dargestellt.

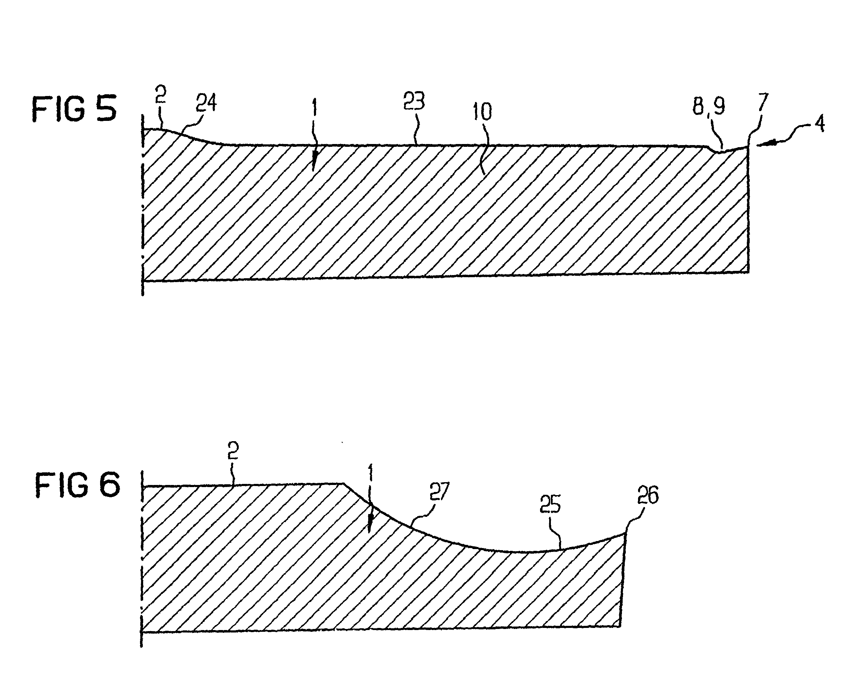

Der Profilquerschnitt von Fig. 6 durch den Schneidkantenverlauf seitlich der Schneidspitze 4 zeigt eine deutlich verbreiterte Spanfläche 25 mit vergleichsweise großem positivem Spanwinkel und dahinter mit zunehmendem Abstand von der Schneidkante 26 den zur Deckfläche 2 aufsteigenden Spanformbereich 27. Die im kelchartigen Bereich der Flankenkanten 16,17 befindlichen Flanken 11,12 des Spanformers 10 bilden konkav ausgerundete Übergangsbereiche zwischen dem vorderen Bereich der Schneidspitze 4 und dem hinteren, beim Ausführungsbeispiel dreieckigen Grundformbereich der Gewindeschneidplatte 1. Die Spanwinkel der Spanflächen 8,9 sind ebenfalls positiv.

Mindestens eine der Flankenkanten 16,17 des Spanformers 10 bildet in Draufsicht einen spitzen Winkel 28 mit der benachbarten Schneidkante 5 oder 6.

Die Spanflächen 8,9 im Bereich der Schneidspitze 4 und die außerhalb der Schneidspitze 4 anschließende Spanfläche 25 sowie das Niveau der Plateaufläche 23 des Spanformers 10 liegen unterhalb der Deckfläche 2.

### Bezugszeichenliste

- 1: Gewindeschneidplatte
- 2: Deckfläche
- 3: Schneidecke
- 4: Schneidspitze
- 5: Schneidkante
- 6: Schneidkante
- 7: Winkelscheitelschneidkante
- 8: Spanfläche
- 9: Spanfläche
- 10: Spanformer
- 11: Flanke des Spanformers
- 12: Flanke des Spanformers
- 13: Abstandsmaß
- 14: Abstandsmaß
- 15: Ausrundung
- 16: Flankenkante
- 17: Flankenkante
- 18: spitzer Winkel
- 19: Scheitelbereich
- 20: kelchartiges Ende
- 21: kelchartiges Ende
- 22: Spannloch
- 23: Plateaufläche
- 24: aufsteigender Bereich
- 25: Spanfläche
- 26: Schneidkante
- 27: Spanformbereich

## Patentansprüche

1. Gewindeschneidplatte (1) aus einem harten Schneidwerkstoff mit einer Auflagefläche und einer dazu im wesentlichen parallelen Deckfläche (2) sowie mit mindestens einer Schneidecke (3), die eine entsprechend der Gewindeform profilierte Schneidspitze (4) mit nach Art
- der Schenkel eines V oder
- allgemein eines konvexen Vorsprunges oder
- einer Zwischenform eines solchen Gebildes zueinander stehende Schneidkanten (5,6) bildet, über deren Spanfläche (8,9) ein Spanformer (10) nach Art eines zur Schneidspitze (4,7) hin konvergierenden Sporns hinaussteht, dessen nach Art der Steilwände eines Sporns geneigt abfallende Flanken (11,12) von den benachbarten Schneidkanten (5,6) einen die zugeordneten Spanflächen (8,9) enthaltenden Abstand einhalten, wobei der spornartige Spanformer (10) die Spanflächen (8,9) nach Art eines Tafelberges überragt
dadurch gekennzeichnet,
daß der Flankenabstand des Spanformers (10) zum Schneidkantenverlauf (5,6) zur Bildung einer breiteren (8) und einer schmaleren (9) Spanfläche an beiden Seiten unterschiedlich groß ist, und daß die der schmaleren Spanfläche (9) zugewandte Flanke (12) des Spanformers (10) stärker geneigt ist als die der breiteren Spanfläche (8) zugewandte Flanke (11).

2. Schneidplatte nach Anspruch, 1,
dadurch gekennzeichnet,
daß die der schmaleren Spanfläche (9) zugewandte Flanke (12) des Spanformers (10) einen größeren Neigungswinkel mit der angrenzenden Spanfläche (9) einschließt als die andere Flanke (11) mit der anderen Spanfläche (8).

3. Schneidplatte nach Anspruch 1 oder 2,
gekennzeichnet durch
einen ausgerundeten Übergang der Flanken (11,12) des Spanformers (10) in die zugehörigen Spanflächen (8,9).

4. Schneidplatte nach einem der Ansprüche 1 bis 3,
dadurch gekennzeichnet,
daß der spornartige Spanformer (10) mit der Plateaufläche (23) seiner Tafelbergform nicht über die Deckfläche (2) hinaussteht.

5. Schneidplatte nach Anspruch 4,
dadurch gekennzeichnet,
daß die den Übergang der Plateaufläche (23) des Spanformers (10) zu den Spornflanken (11,12) bildenden Flankenkanten (16,17) mindestens im Schneidspitzenbereich (4) geradlinig sind und zwischen sich einen spitzen. Winkel (18) bilden, dessen äußerer Scheitelbereich (19) abgerundet ist.

6. Schneidplatte nach einem der Ansprüche 1 bis 5,
dadurch gekennzeichnet,
daß die Spornflanken (11,12) an ihren inneren, mit Abstand von der Schneidspitze (4,7) positionierten Enden (20,21) beginnend kelchartig ausgerundet divergieren.

7. Schneidplatte nach Anspruch 5 oder 6,
dadurch gekennzeichnet,
daß die Plateaufläche (23) von ihrem äußeren der Schneidspitze (4,7) zugewandten Ende in Richtung nach innen leicht ansteigend geneigt ist.

8. Schneidplatte nach Anspruch 7,
dadurch gekennzeichnet,
daß die Plateaufläche (23) an ihrem inneren, in Draufsicht kelchartig aufgeweiteten Ende zur Deckfläche (2) hin nach oben aufsteigt.

9. Schneidplatte nach einem der Ansprüche 6 bis 8,
dadurch gekennzeichnet,
daß die im keichartigen Bereich einer Flankenkante (16,17) befindlichen Flanken (11,12) des Spanformers (10) konkav ausgerundete Übergangsbereiche zwischen dem äußeren Schneidspitzenbereich (4) und dem Bereich der Deckfläche (2) der Gewindeschneidplatte (1) bilden.

10. Schneidplatte nach einem der Ansprüche 1 bis 9,
dadurch gekennzeichnet,
daß die Spanflächen (8,9) einen positiven Spanwinkel aufweisen.

11. Schneidplatte nach einem der Ansprüche 1 bis 10,
dadurch gekennzeichnet,
daß mindestens eine der Flankenkanten (16,17) des Spanformers (10) in Draufsicht einen spitzen, sich in Richtung nach außen schließenden Winkel (28) mit der benachbarten Schneidkante (5,6) bildet.

12. Schneidplatte nach einem der Ansprüche 1 bis 11,
dadurch gekennzeichnet,
daß sie mehrere Schneidecken (3) aufweist.

13. Schneidplatte nach einem der Ansprüche 1 bis 12,
dadurch gekennzeichnet,
daß sie eine Dreieckplatte mit drei in den Plattenecken positionierten Schneidecken (3) ist.

## Claims

1. Thread-cutting tip (1) made of a hard cutting material, having a bearing surface and a top surface (2) essentially parallel thereto and having at least one cutting corner (3) which forms a cutting point (4) which is profiled in accordance with the thread form and has cutting edges (5, 6) which are disposed relative to one another like
- the legs of a V or
- a convex projection in general or
- an intermediate form of such an object
and above the rake face (8, 9) of which projects a chip breaker (10) which is like a spur converging towards the cutting point (4, 7) and whose flanks (11, 12) falling away in an inclined manner like the steep walls of a spur maintain a distance from the adjacent cutting edges (5, 6), this distance containing the associated rake faces (8, 9), the spur-like chip breaker (10) projecting above the rake faces (8, 9) like a mesa, characterized in that the flank distance of the chip breaker (10) from the cutting-edge path (5, 6) is of different size on both sides for forming a wider rake face (8) and a narrower rake face (9), and in that that flank (12) of the chip breaker (10) which faces the narrower rake face (9) is inclined to a greater extent than the flank (11) facing the wider rake face (8).

2. Cutting tip according to Claim 1, characterized in that that flank (12) of the chip breaker (10) which faces the narrower rake face (9) encloses a greater angle of inclination with the adjoining rake face (9) than the other flank (11) encloses with the other rake face (8).

3. Cutting tip according to Claim 1 or 2, characterized by a rounded-off transition of the flanks (11, 12) of the chip breaker (10) into the associated rake faces (8, 9).

4. Cutting tip according to one of Claims 1 to 3, characterized in that the spur-like chip breaker (10) does not project above the top surface (2) with the plateau surface (23) of its mesa shape.

5. Cutting tip according to Claim 4, characterized in that the flank edges (16, 17) forming the transition of the plateau surface (23) of the chip breaker (10) to the spur flanks (11, 12) are rectilinear at least in the cutting-point region (4) and form an acute angle (18) between them, the outer apex region (19) of which is rounded off.

6. Cutting tip according to one of Claims 1 to 5, characterized in that the spur flanks (11, 12) diverge like a chalice in a rounded-off manner starting at their inner ends (20, 21) positioned at a distance from the cutting point (4, 7).

7. Cutting tip according to Claim 5 or 6, characterized in that the plateau surface (23) is inclined so as to rise slightly towards the inside from its outer end facing the cutting point (4, 7).

8. Cutting tip according to Claim 7, characterized in that the plateau surface (23) rises up towards the top surface (2) at its inner end widened like a chalice in plan view.

9. Cutting tip according to one of Claims 6 to 8, characterized in that the flanks (11, 12) of the chip breaker (10) located in the chalice-like region of a flank edge (16, 17) form concavely rounded-off transition regions between the outer cutting-point region (4) and the region of the top surface (2) of the thread-cutting tip (1).

10. Cutting tip according to one of Claims 1 to 9, characterized in that the rake faces (8, 9) have a positive rake angle.

11. Cutting tip according to one of Claims 1 to 10, characterized in that at least one of the flank edges (16, 17) of the chip breaker (10), in plan view, forms an acute angle (28), closing towards the outside, with the adjacent cutting edge (5, 6).

12. Cutting tip according to one of Claims 1 to 11, characterized in that it has a plurality of cutting corners (3).

13. Cutting tip according to one of Claims 1 to 12, characterized in that it is a triangular tip with three cutting corners (3) positioned in the tip corners.

## Revendications

1. Plaquette de taille de taraudage (1) constituée en un matériau de coupe dur, comportant une surface d'appui et une surface de couverture (2) sensiblement parallèle à cette dernière, ainsi qu'au moins un coin de coupe (3) qui forme une pointe de coupe (4) profilée en correspondance de la forme du taraudage et comprenant des arêtes de coupe (5, 6) orientées l'une vers l'autre à la manière
- des bras d'un V, ou
- d'une saillie convexe en général, ou
- d'une forme intermédiaire d'une telle structure,
et au-delà de sa surface de coupe (8, 9) dépasse un élément de formage de copeaux (10) à la manière d'un éperon qui converge vers la pointe de coupe (4, 7), dont les flancs (11, 12), qui descendent en oblique à la manière des parois raides d'un éperon, maintiennent par rapport aux arêtes de coupe voisines (5, 6) une distance qui contient les surfaces de coupe associées (8, 9), l'élément de formage de copeaux (10) en forme d'éperon dépassant les surfaces de coupe (8, 9) à la manière d'un haut-plateau,
caractérisée en ce que
la distance des flancs entre l'élément de formage de copeaux (10) et le tracé des arêtes de coupe (5, 6) est de taille différente sur les deux côtés pour former une surface de coupe plus large (8) et une surface de coupe plus étroite (9), et en ce que le flanc (12), orienté vers la surface de coupe étroite (9), de l'élément de formage de copeaux (10) est incliné plus fortement que le flanc (11) orienté vers la surface de coupe plus large (8).

2. Plaquette de taille de taraudage selon la revendication 1, caractérisée en ce que le flanc (12), orienté vers la surface de coupe plus étroite (9), de l'élément de formage de copeaux (10) enferme avec la surface de coupe (9) un angle d'inclinaison plus grand que l'angle enfermé par l'autre flanc (11) avec l'autre surface de coupe (8).

3. Plaquette de taille de taraudage selon l'une ou l'autre des revendications 1 et 2, caractérisée par une transition arrondie des flancs (11, 12) de l'élément de formage de copeaux (10) vers les surfaces de coupe associées (8, 9).

4. Plaquette de taille de taraudage selon l'une quelconque des revendications 1 à 3, caractérisée en ce que l'élément de formage de copeaux (10) en forme d'éperon ne dépasse pas au-delà de la surface de couverture (2) de par la surface supérieure (23) de sa forme en haut-plateau.

5. Plaquette de taille de taraudage selon la revendication 4, caractérisée en ce que les arêtes de flanc (16, 17) formant la transition de la surface supérieure (23) de l'élément de formage de copeaux (10) vers les flancs d'éperon (11, 12) sont rectilignes au moins dans la zone de la pointe de coupe (4) et forment entre elles un angle aigu (18) dont la région de sommet extérieure (19) est arrondie.

6. Plaquette de taille de taraudage selon l'une quelconque des revendications 1 à 5, caractérisée en ce que les flancs d'éperon (11, 12) divergent en forme arrondie à la manière d'une coupelle en commençant au niveau de leurs extrémités intérieures (20, 21) positionnées à distance de la pointe de coupe (4, 7).

7. Plaquette de taille de taraudage selon l'une ou l'autre des revendications 5 et 6, caractérisée en ce que la surface supérieure (23) est inclinée légèrement de manière à monter vers l'intérieur depuis son extrémité extérieure orientée vers la pointe de coupe (4, 7).

8. Plaquette de taille de taraudage selon la revendication 7, caractérisée en ce que la surface supérieure (23) monte, au niveau son extrémité intérieure évasée en forme de coupelle, vue de dessus, vers le haut en direction de la surface de couverture (2).

9. Plaquette de taille de taraudage selon l'une quelconque des revendications 6 à 8, caractérisée en ce que les flancs (11, 12) de l'élément de formage de copeaux (10) qui se trouvent dans la zone en forme de coupelle d'une arête de flanc (16, 17) forment des zones de transition arrondies concaves entre la région de pointe de coupe extérieure (4) et la région de la surface de couverture (2) de la plaquette de taille de taraudage (1).

10. Plaquette de taille de taraudage selon l'une quelconque des revendications 1 à 9, caractérisée en ce que les surfaces de coupe (8, 9) présentent un angle de coupe positif.

11. Plaquette de taille de taraudage selon l'une quelconque des revendications 1 à 10, caractérisée en ce que l'une au moins des arêtes de flanc (16, 17) de l'élément de formage de copeaux (10) forme avec l'arête de coupe voisine (5, 6) un angle aigu (28) qui, en vue de dessus, se ferme en direction vers l'extérieur.

12. Plaquette de taille taraudage selon l'une quelconque des revendications 1 à Il, caractérisée en ce qu'elle comprend plusieurs coins de coupe (3).

13. Plaquette de taille de taraudage selon l'une quelconque des revendications 1 à 12, caractérisée en ce qu'elle est une plaquette triangulaire avec trois coins de coupe (3) positionnés dans les coins de la plaquette.
